# FASCICULE DE BREVET EUROPEEN

(11) **EP 1 548 336 B1**
(45) Date de publication et mention de la délivrance du brevet: **30.08.2006**
(21) Numéro de dépôt: 04029434.0
(22) Date de dépôt: 13.12.2004
(51) Int. Cl.: F16J 3/02, F15B 15/10

(54) **Boitier pour servomoteur pneumatique de vehicule et servomoteur muni de ce boitier**
Gehäuse für einen pneumatischen Bremskraftverstärker für ein Fahrzeug und Bremskraftverstärker mit einem derartigen Gehäuse
Housing for a pneumatic brake booster for a vehicle and brake booster comprising such a housing

(30) Priorité: 24.12.2003 FR 0315509
(43) Date de publication de la demande: 29.06.2005
(73) Titulaire: ROBERT BOSCH GMBH, 70442 Stuttgart (DE)
(72) Inventeur: Maligne, Jean-Charles, 93300 Aubervilliers (FR); Attard, Jean-Marc, 60340 Villiers sous St Leu (FR); Verbo, Ulysse, 08190 Sant Cugat (FR); Richard, Philippe, 77500 Chelles (FR)
(74) Mandataire: Hurwic, Aleksander Wiktor

(56) Documents cités:
- WO-A-03/037693
- FR-A- 1 547 451
- US-A- 4 936 635

## Description

La présente invention se rapporte à un boîtier pour servomoteur pneumatique de véhicule et à un servomoteur muni de ce boîtier.

Le document WO 03/037693 divulgue un boîtier selon le préambule de la revendication 1 et un servomoteur selon le préambule de la revendication 7.

Un servomoteur est destiné à amplifier l'action exercée par le conducteur d'un véhicule sur une pédale de frein et à transmettre cette action amplifiée à un dispositif de freinage d'une (ou plusieurs) roue(s) du véhicule.

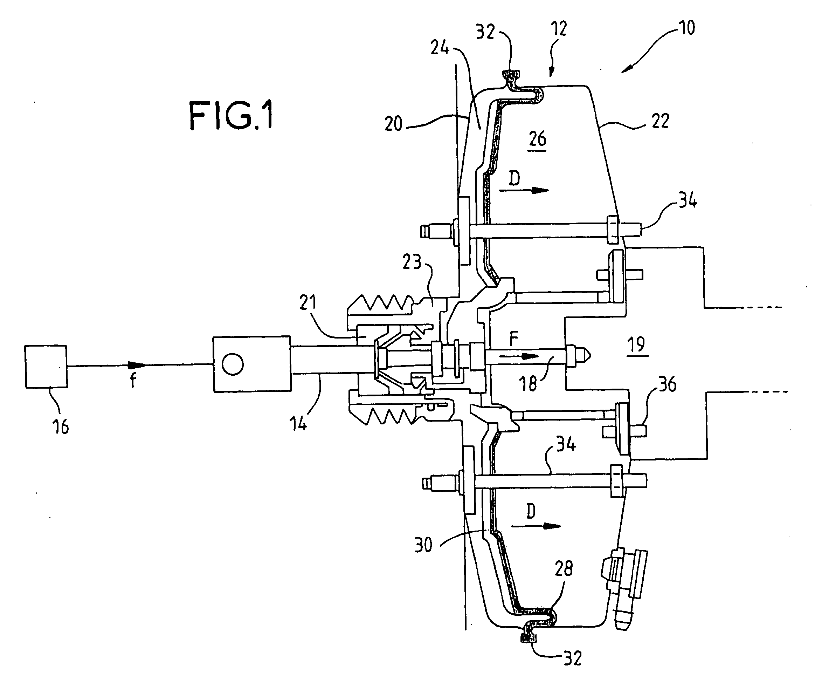

A cet effet, un servomoteur pneumatique 10 (figure 1) connu comporte un boîtier 12 coopérant avec une tige 14 de commande, reliée à la pédale 16 de frein, et avec une tige 18 de poussée reliée au maître-cylindre 19 solidaire du dispositif de freinage, de telle sorte que lorsque la tige 14 de commande est déplacée au moyen d'une commande f transmise par la pédale de frein, le servomoteur déplace la tige 18 au moyen d'une poussée F d'intensité supérieure à l'intensité de la commande f.

Pour cela, le boîtier 12 comprend un couvercle 20, logeant un mécanisme 21 pneumatique, et un cylindre 22 coopérant avec le couvercle 20 de façon étanche. Le volume interne du boîtier 12 est divisé en une première chambre 24, dite chambre arrière, et en une deuxième chambre 26, dite chambre avant, au moyen d'une membrane 28 étanche agencée à une jupe rigide 30 et solidaire du boîtier 12.

Dans un premier temps, lorsqu'aucun freinage n'est sollicité par le conducteur du véhicule, la pression dans les chambres arrière 24 et avant 26 est maintenue inférieure à la pression atmosphérique au moyen d'un dispositif de pompage non représenté. Dans ce cas, la membrane 28 est dans une position de repos telle que représentée.

Dans un deuxième temps, lorsque le conducteur du véhicule appuie sur la pédale 16 de frein, une entrée d'air à pression atmosphérique s'effectue dans la chambre arrière 24 et entraîne le déplacement D de la membrane 28, de la jupe 30 et du piston 18 solidaire de ces derniers, transmettant ainsi une poussée F au maître-cylindre 19.

La présente invention résulte de la constatation que l'utilisation d'une membrane et d'une jupe agencées comme précédemment décrit présente de nombreux inconvénients.

De fait, une longueur de membrane importante est utilisée pour recouvrir la jupe métallique et former un repli permettant le déplacement de cette membrane, ce qui augmente le coût et le poids du boîtier.

De plus, une opération complexe d'adhésion de la membrane sur la jupe doit être effectuée, ce qui accroît la complexité et le coût de production du boîtier.

La présente invention remédie à ces inconvénients. Elle concerne un boîtier pour servomoteur pneumatique de véhicule muni d'une jupe rigide et d'une membrane élastique reliée, à une première extrémité, à la jupe et, à une seconde extrémité, au boîtier, caractérisé en ce que la membrane est maintenue tendue entre le boîtier et la jupe de façon indépendante de la position de la jupe.

Cette invention présente l'avantage de réduire la longueur de membrane élastique requise pour assurer l'étanchéité du dispositif puisqu'elle ne requiert pas de repli de la membrane pour permettre ses déplacements. Dès lors, le poids et le coût du boîtier sont réduits.

Dans une réalisation, l'extrémité de la membrane reliée à la jupe est fixée à une extrémité de cette jupe. Dès lors, la longueur de la membrane utilisée est à nouveau réduite puisque la membrane ne recouvre pas la jupe.

En outre, un tel agencement ne requiert pas une opération complexe de recouvrement de la membrane sur la jupe, diminuant ainsi le coût de fabrication du boîtier.

Par ailleurs, dans une réalisation, la jupe 204 métallique est allongée de façon à former le corps du dispositif 214 pneumatique, réduisant à nouveau le poids du dispositif.

Ainsi, l'invention concerne, de façon générale, un boîtier pour servomoteur pneumatique de véhicule muni d'une jupe rigide et d'une membrane élastique reliée, à une première extrémité, à la jupe et, à une seconde extrémité, au boîtier, qui est caractérisé en ce que la membrane est maintenue tendue entre le boîtier et la jupe de façon indépendante de la position de la jupe.

La membrane est, par exemple, fixée à une extrémité de la jupe métallique.

Selon une réalisation, la membrane comprend un matériau élastique, tel que du caoutchouc.

Dans une réalisation, la membrane comprend des fibres.

Selon une réalisation, les extrémités de la membrane peuvent pivoter, se dérouler et/ou s'enrouler en fonction du déplacement de la jupe.

La jupe métallique est, par exemple, solidaire du corps du dispositif pneumatique de commande.

L'invention concerne aussi un servomoteur pneumatique de véhicule muni d'un boîtier comprenant une jupe rigide et d'une membrane élastique reliée, à une première extrémité, à la jupe et, à une seconde extrémité, au boîtier, qui est caractérisé en ce que la membrane est maintenue tendue entre le boîtier et la jupe de façon indépendante de la position de la jupe.

D'autres caractéristiques et avantages de l'invention apparaîtront avec la description ci-dessous, à titre non limitatif, en référence aux dessins ci-annexés sur lesquels :
- la figure 1 représente une vue en coupe transversale d'un servomoteur connu ;
- la figure 2 représente une vue transversale d'un servomoteur muni d'un boîtier conforme à l'invention.

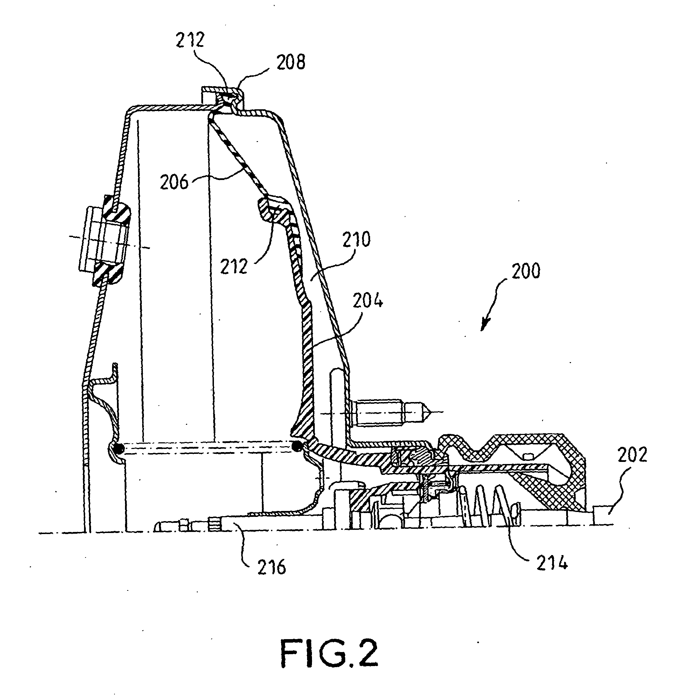

Sur la figure 2 est représenté un servomoteur 200 muni d'une tige 202 de poussée entraînant le déplacement d'une jupe 204 rigide et d'une membrane 206 reliée à la jupe 204 et au boîtier 208 du servomoteur.

Conformément à l'invention, la membrane est maintenue tendue entre le boîtier et la jupe de façon indépendante de la position de cette dernière.

Ainsi, lorsque la jupe 204 se déplace sous l'effet de l'accroissement de pression dans la chambre arrière 210 du servomoteur, la membrane 206 élastique se déforme pour rester tendue, c'est-à-dire de façon sensiblement rectiligne lors du mouvement de la jupe.

Pour cela, la membrane 206 est fabriquée en matière élastique, telle que du caoutchouc, renforcée par des fibres de façon à assurer une transmission de poussée due à la différence de pression entre les chambres.

De fait, la poussée transmise par la membrane peut représenter une part importante de la poussée transmise à la tige 216 de poussée, de l'ordre de 25 %.

Dès lors, la jupe 204 métallique peut avoir des dimensions inférieures aux dimensions d'une jupe utilisée dans l'art antérieur, allégeant à nouveau le servomoteur.

Par ailleurs, la jupe 204 est allongée de façon à former le corps du dispositif 214 pneumatique, réduisant le poids du dispositif.

Il convient de signaler que l'assemblage de la membrane avec la jupe et le boîtier est aisé car il est effectué au moyen de fixations localisées ne nécessitant pas un recouvrement de la membrane sur la jupe.

De façon à maintenir la membrane 206 tendue, ses extrémités 212 peuvent être agencées de telle sorte qu'elles pivotent selon les déplacements de la jupe et/ou de telle sorte que la membrane se déroule ou s'enroule de façon à faire varier sa longueur.

## Revendications

1. Boîtier pour servomoteur pneumatique de véhicule muni d'une jupe rigide et d'une membrane élastique reliée, à une première extrémité, à la jupe et, à une seconde extrémité, au boîtier, **caractérisé en ce que** la membrane (206) est maintenue tendue entre le boîtier et la jupe (204) de façon indépendante de la position de la jupe.

2. Boîtier selon la revendication 1, **caractérisé en ce que** la membrane est fixée à une extrémité de la jupe métallique.

3. Boîtier selon la revendication 1 ou 2, **caractérisé en ce que** la membrane comprend un matériau élastique, tel que du caoutchouc.

4. Boîtier selon la revendication 1, 2 ou 3, **caractérisé en ce que** la membrane comprend des fibres.

5. Boîtier selon la revendication 1, 2, 3 ou 4, **caractérisé en ce que** les extrémités de la membrane pivotent, se déroulent et/ou s'enroulent en fonction du déplacement de la jupe.

6. Boîtier selon l'une des revendications précédentes, **caractérisé en ce que** la jupe métallique est solidaire du corps du dispositif pneumatique de commande.

7. Servomoteur pneumatique de véhicule muni d'un boîtier comprenant une jupe rigide et d'une membrane élastique reliée, à une première extrémité, à la jupe et, à une seconde extrémité, au boîtier, **caractérisé en ce que** la membrane est maintenue tendue entre le boîtier et la jupe de façon indépendante de la position de la jupe.

## Claims

1. Casing for a vehicle pneumatic booster furnished with a rigid skirt and an elastic membrane connected, at a first end, to the skirt and, at a second end, to the casing, **characterized in that** the membrane (206) is kept stretched between the casing and the skirt (204) irrespective of the position of the skirt.

2. Casing according to Claim 1, **characterized in that** the membrane is attached to one end of the metal skirt.

3. Casing according to Claim 1 or 2, **characterized in that** the membrane comprises an elastic material, such as rubber.

4. Casing according to Claim 1, 2 or 3, **characterized in that** the membrane comprises fibres.

5. Casing according to Claim 1, 2, 3 or 4, **characterized in that** the ends of the membrane pivot, unroll and/or roll up depending on the movement of the skirt.

6. Casing according to one of the preceding claims, **characterized in that** the metal skirt is fixedly attached to the body of the pneumatic control device.

7. Vehicle pneumatic booster furnished with a casing comprising a rigid skirt and an elastic membrane connected, at a first end, to the skirt and, at a second end, to the casing, **characterized in that** the membrane is kept stretched between the casing and the skirt irrespective of the position of the skirt.

## Patentansprüche

1. Gehäuse für einen pneumatischen Servomotor eines Fahrzeugs, das mit einer starren Schürze und einer elastischen Membran versehen ist, die an einem ersten Ende mit der Schürze und an einem zweiten Ende mit dem Gehäuse verbunden ist, **dadurch gekennzeichnet, dass** die Membran (206) zwischen dem Gehäuse und der Schürze (204) unabhängig von der Stellung der Schürze gespannt gehalten ist.

2. Gehäuse nach Anspruch 1, **dadurch gekennzeichnet, dass** die Membran an einem Ende der Metallschürze befestigt ist.

3. Gehäuse nach Anspruch 1 oder 2, **dadurch gekennzeichnet, dass** die Membran ein elastisches Material wie Gummi enthält.

4. Gehäuse nach Anspruch 1, 2 oder 3, **dadurch gekennzeichnet, dass** die Membran Fasern enthält.

5. Gehäuse nach Anspruch 1, 2, 3 oder 4, **dadurch gekennzeichnet, dass** die Enden der Membran abhängig von der Verschiebung der Schürze schwenken, sich abrollen und/oder aufrollen.

6. Gehäuse nach einem der vorangehenden Ansprüche, **dadurch gekennzeichnet, dass** die Metallschürze mit dem Körper der pneumatischen Steuervorrichtung fest verbunden ist.

7. Pneumatischer Servomotor eines Fahrzeugs, der mit einem Gehäuse versehen ist, das eine starre Schürze und eine elastische Membran aufweist, die an einem ersten Ende mit der Schürze und an einem zweiten Ende mit dem Gehäuse verbunden ist, **dadurch gekennzeichnet, dass** die Membran zwischen dem Gehäuse und der Schürze unabhängig von der Stellung der Schürze gespannt gehalten ist.
